(19) Europäisches Patentamt
European Patent Office
Office européen des brevets

(11) **EP 4 133 940 A1**

(12) # EUROPEAN PATENT APPLICATION
published in accordance with Art. 153(4) EPC

(43) Date of publication:
**15.02.2023 Bulletin 2023/07**

(21) Application number: **21784857.1**

(22) Date of filing: **02.04.2021**

(51) International Patent Classification (IPC):
**A01P 13/00** (2006.01)  **A01N 43/50** (1980.01)
**A01N 25/24** (1980.01)  **A01N 25/34** (1980.01)

(52) Cooperative Patent Classification (CPC):
**A01N 25/24; A01N 25/34; A01N 43/50; A01P 13/00**

(86) International application number:
**PCT/JP2021/014334**

(87) International publication number:
**WO 2021/206021 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.04.2020 JP 2020068514**

(71) Applicants:
• **Nichiban Co., Ltd.
Bunkyo-ku
Tokyo
112-8663 (JP)**
• **Wakayama, Kenji
Funabashi-shi, Chiba 274-0063 (JP)**

(72) Inventors:
• **HATTORI Rie
Tokyo 112-8663 (JP)**
• **YOSHIZUMI Kazuhiko
Tokyo 112-8663 (JP)**
• **KONO Kazuhiro
Tokyo 112-8663 (JP)**
• **DOI Takahiro
Tokyo 112-8663 (JP)**
• **TAKAICHI Chihiro
Tokyo 112-8663 (JP)**
• **WAKAYAMA Kenji
Funabashi-shi, Chiba 274-0063 (JP)**

(74) Representative: **Beckmann, Claus
Kraus & Weisert
Patentanwälte PartGmbB
Thomas-Wimmer-Ring 15
80539 München (DE)**

(54) **AGROCHEMICAL-CONTAINING PRESSURE-SENSITIVE ADHESIVE TAPE**

(57) The present invention pertains to an agrochemical-containing pressure-sensitive adhesive tape 10 that comprises a base material 11 and a pressure-sensitive adhesive layer 12 formed on the base material 11, wherein the pressure-sensitive adhesive layer 12 contains an emulsion-type pressure-sensitive adhesive and a systemic agrochemical. Preferably, the emulsion-type pressure-sensitive adhesive is an acrylic emulsion-type pressure-sensitive adhesive or a rubber-based emulsion pressure-sensitive adhesive that comprises a latex rubber as a main component. Preferably, the agrochemical is at least one member selected from among an insecticide, a fungicide, an insecticidal/fungicidal agent, a herbicide and a plant growth regulator.

## FIG. 1

**Description**

Technical Field

The present disclosure relates to an agrochemical-containing pressure sensitive adhesive tape.

Background Art

At present, agrochemicals are safely processed in accordance with methods of use determined based on the types and targets of chemical agents. However, in many of the methods of use, agrochemicals are scattered over agricultural land in a uniform and simultaneous manner as typified by spraying in the air. While this application method has merits that the operation cost is low and an agrochemical can be uniformly distributed over agricultural land, it causes diffusion of the agrochemical (drift) at the time of application, which leads to inevitable exposure to workers and poses an issue of adverse effects on the neighborhood environment and ecosystem. In addition, while the application method enables uniform application of an agrochemical, the application method can be said to be ineffective in terms of the efficacy of the agrochemical because only part of the agrochemical applied to a target area adheres to its target and the rest does not adhere to the target and drops on the soil in the target area without exhibiting the effects.

On the other hand, some agrochemicals are applied in other methods such as tree trunk injection or coating. However, tree trunk injection requires drilling a hole in each target object before applying an agrochemical. This is not only laborious but may cause an adverse effect on the growth of the target. Coating of an agrochemical is more convenient than tree trunk injection, but the chemical liquid applied is just covering the surface of a trunk and the surface of the chemical liquid is not protected. Hence, the coating method does not eliminate the risk that the agrochemical leaks to the soil due to rain, wind and the like so that the agrochemical cannot exhibit the effects; or the concern about agrochemical drift to surrounding plants.

Accordingly, as an application method different from the methods above, Patent Literature 1 proposes a herbicidal sheet in which picloram, i.e., an indoleacetic acidlike active herbicide, is mixed with lanolin and provided on the surface of a pressure sensitive adhesive layer of a gum sheet so as to be applied to a substrate. Patent Literature 2 proposes a disease control sheet for agricultural and horticultural use in which an acrylic pressure sensitive adhesive and an agricultural and horticultural bactericide are mixed.

Patent Literature 2 discloses a disease control sheet for agricultural and horticultural use that includes: a substrate; and a disease control composition layer for agriculture and horticulture containing a pressure sensitive adhesive layer. In Patent Literature 2, the acrylic pressure sensitive adhesive is described as the material of the pressure sensitive adhesive layer.

Citation List

Patent Literature

   [Patent Literature 1] JP 49-99725 U1 (1974)
   [Patent Literature 2] JP 07-23282 B (1995)

Summary of the Disclosure

Technical Problem

However, since the agrochemical described in Patent Literature 1 is contained in a large amount per 1 $cm^2$ of the sheet, a large quantity of the agrochemical is necessary to cause a target plant to wither and die.

Patent Literature 2 mentions non-permeable bactericides such as chlorosalonyl and manzeb as examples of the bactericide. Consequently, the agrochemical is only intended to have effect on parts to be protected, such as the vicinity of the sheet attached, a grafting portion and a cut section, and it is unclear whether the agrochemical has effect on a whole plant.

The present disclosure has been made in view of the above circumstances to provide an agrochemical-containing pressure sensitive adhesive tape capable of efficiently administering an agrochemical to a target plant.

Solution to the Problem

As a result of intensive studies, the present inventors have found that using an emulsion-type pressure sensitive adhesive as a material of a pressure sensitive adhesive in which an agrochemical is contained enables the agrochemical dispersed in the pressure sensitive adhesive to be taken into a plant via moisture evaporated from the plant, thereby enhancing the permeability of the agrochemical into a target plant and the efficiency in administration of the agrochemical to the target plant. The present inventors have also found that an emulsion-type pressure sensitive adhesive, which is an aggregate of adhesive fine particles, enables an agrochemical to be more effectively administered to a plant because the emulsion-type pressure sensitive adhesive has a larger surface area to increase the contact with the moisture compared with a pressure sensitive adhesive dissolved in a solvent and applied even if they have the same composition. Thus, the present disclosure has been accomplished.

That is, the present disclosure is an agrochemical-containing pressure sensitive adhesive tape, including: a substrate; and a pressure sensitive adhesive layer provided on the substrate, the pressure sensitive adhesive layer containing an emulsion pressure sensitive adhesive and a systemic agrochemical.

The emulsion pressure sensitive adhesive is preferably an acrylic emulsion pressure sensitive adhesive.

The emulsion pressure sensitive adhesive may be a rubber-based emulsion pressure sensitive adhesive containing latex rubber as a main component.

The agrochemical is preferably at least one of an insecticide, a bactericide, an insecticidal and bactericidal agent, a herbicide and a plant growth regulator.

Preferably, the acrylic emulsion pressure sensitive adhesive is formed by polymerizing (a) a (meth)acrylic acid alkyl ester having an alkyl group having 4 or more and 12 or less carbon atoms, (b) a carboxyl group-containing monomer, and (c) a monomer mixture containing a copolymerizable monomer. (a) The (meth)acrylic acid alkyl ester having an alkyl group having 4 or more and 12 or less carbon atoms is preferably contained in an amount of 50% by mass or more and 99.5% by mass or less. (b) The carboxyl group-containing monomer is preferably contained in an amount of 0.5% by mass or more and 10% by mass or less. (c) The copolymerizable monomer is preferably contained in an amount of 0% by mass or more and 40% by mass or less.

The rubber-based emulsion pressure sensitive adhesive preferably contains latex rubber and a tackifier. The latex rubber is preferably at least one of natural rubber, chloroprene rubber, styrene-butadiene rubber, butadiene rubber, acrylonitrile-butadiene rubber, methyl methacrylate butadiene rubber and an ethylene-vinyl acetate copolymer. The latex rubber is preferably contained in an amount of 30% by mass or more and 80% by mass or less relative to 100% by mass of the rubber-based emulsion pressure sensitive adhesive.

Advantageous Effects of the Disclosure

An agrochemical-containing pressure sensitive adhesive tape according to the present disclosure enables efficient administration of an agrochemical to a target plant.

Brief Description of Drawings

FIG. 1 is a cross section of an agrochemical-containing pressure sensitive adhesive tape according to an embodiment of the disclosure.
FIG. 2 is a photograph of a camellia (Camellia japonica L.) before a test in Example 4.
FIG. 3 is a photograph of the camellia after the test in Example 4.
FIG. 4 is a photograph of Japanese kudzu (Pueraria lobata (Willd.) Ohwi subsp. lobata) before a test in Example 7.
FIG. 5 is a photograph of the Japanese kudzu after the test in Example 7.

Description of Embodiments

Hereinafter, embodiments of the present disclosure will be described with reference to the drawings. The following embodiments are presented for illustrative purposes, and the present disclosure is not limited in any way to the embodiments set forth below.

[Agrochemical-containing pressure sensitive adhesive tape]

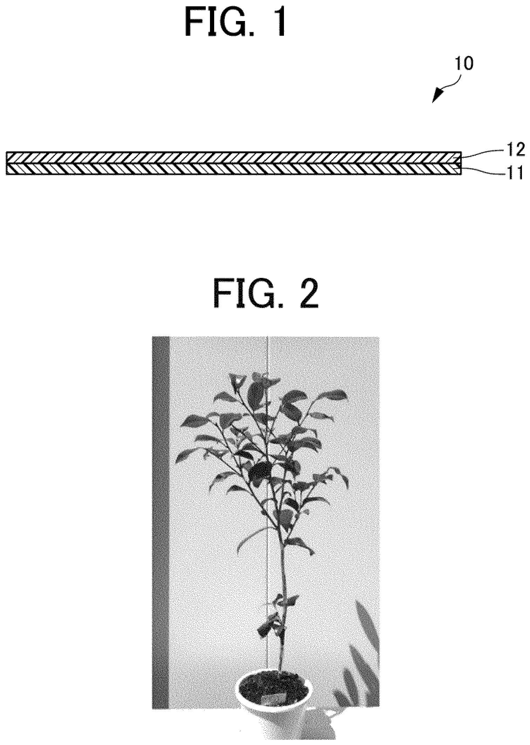

An embodiment of the present disclosure will be described with reference to FIG. 1.

As illustrated in FIG. 1, an agrochemical-containing pressure sensitive adhesive tape 10 of the present disclosure includes: a substrate 11; and a pressure sensitive adhesive layer 12 that is provided on the substrate and contains an agrochemical.

Hereinafter, components of the agrochemical-containing pressure sensitive adhesive tape will be described in detail.

(Substrate)

The agrochemical-containing pressure sensitive adhesive tape 10 of the present disclosure is used by being attached or wound around a trunk or stem of a tree. Therefore, the substrate 11 may preferably have flexibility or bendability; adhesiveness to a trunk or stem; and physical properties that prevent evaporation and leakage of the agrochemical. Examples of the substrate 11 include: polyolefin materials such as polyethylene, polypropylene, ethylene-propylene copolymer, ethylene-butene-1 copolymer, ethylene-octene copolymer, ethylene-vinyl acetate copolymer and ethylene-vinyl alcohol copolymer; polyvinyl alcohol materials; acrylic materials such as polymethyl methacrylate; polyester materials such as polyethylene terephthalate, polybutylene terephthalate and polycarbonate; polyamide materials such as nylon 6 and nylon 6,6; ionomer materials having metal ions such as zinc or sodium in the structures; styrene materials such as polystyrene, styrene isoprene copolymer and styrene butadiene copolymer; polyurethane materials; PVC materials; fluorine materials such as tetrafluoroethylene, tetrafluoropropylene, polyvinylidene difluoride, tetrafluoroethylene-ethylene copolymer resin, polychlorotrifluoroethylene and polyvinyl fluoride; cellulose materials such as acetate and cellophane; biodegradable plastics such as polylactic acid; metal foil such as aluminum, silver and gold; a mixture or laminated structure of one or 2 or more selected from any of the kinds of the materials above.

The substrate 11 may have any thickness appropriately selected in view of physical properties such as elongation, tensile strength and workability as well as the conformability to a surface of a trunk or stem. The substrate 11 may preferably have a thickness of 5 $\mu$m or more and 200 $\mu$m or less, and more preferably 20 $\mu$m or more and 100 $\mu$m or less. If the substrate 11 has a thickness less than 5 $\mu$m, the strength and handleability of the agrochemical-containing pressure sensitive adhesive tape 10 deteriorate, so that it becomes difficult to attach the tape 10 to a trunk or stem or the tape 10 may break due to contact with the bark of a tree. If the substrate 11 has a thickness more than 200 $\mu$m, the agrochemical-containing pressure sensitive adhesive tape 10 becomes less conformable to a trunk or stem when wound around it and the tape 10 becomes easy to come off.

In the case that the substrate 11 is metal foil, the thickness may preferably be 5 $\mu$m or more and 200 $\mu$m or less, and more preferably 20 $\mu$m or more and 100 $\mu$m or less.

In the case that the substrate 11 is a resin film, the thickness may preferably be 5 $\mu$m or more and 200 $\mu$m or less, more preferably 10 $\mu$m or more and 200 $\mu$m or less, and still more preferably 10 $\mu$m or more and 100 $\mu$m or less.

Incidentally, in the case that the substrate 11 has a very small thickness, a carrier film to be described later may be provided on a surface (also referred to as the other surface) opposite to the surface on which the pressure sensitive adhesive layer 12 is provided (also referred to as one surface).

The substrate 11 may have any size appropriately selected based on the size of a target plant and the concentration of a herbicide.

In the case that the substrate 11 is a resin film, at least one of the pressure sensitive adhesive layer 12 and the substrate 11 may be subjected to treatment such as sand blasting treatment or corona treatment.

The carrier film may be any known one but may preferably be formed using films made of thermoplastics such as polyurethane, polyethylene, polypropylene, ionomer, polyamide, polyvinyl chloride, polyvinylidene chloride, ethylene-vinyl acetate copolymer, thermoplastic polyester and polytetrafluoroethylene. Such films may be laminated on paper.

The carrier film formed of the films above and the like may desirably have a large thickness; or enough stretchability and durability. The carrier film may have any thickness appropriately set, but the thickness is usually 10 $\mu$m or more, and preferably 20 $\mu$m or more. The upper limit value of the thickness is about 500 $\mu$m.

The substrate 11 may contain, to an extent that does not inhibit the effects of the present agrochemical-containing pressure sensitive adhesive tape, antioxidants such as phenols and amines or ultraviolet absorbers such as benzophenones, hindered amine photostabilizers, and fillers such as calcium carbonate and silica. The substrate 11 may be subjected to treatments such as coloring; printing of letters and the like; and coating or vapor deposition of a remover, a primer, a weather-resistant treatment agent and the like as appropriate.

(Pressure sensitive adhesive layer)

The pressure sensitive adhesive layer 12 contains: an emulsion pressure sensitive adhesive in which a pressure sensitive adhesive is dispersed in water; and a systemic agrochemical.

The "emulsion pressure sensitive adhesive" means an emulsion in which a waterinsoluble pressure sensitive adhesive (an adhesive polymer compound) is dispersed in an aqueous solvent in a particulate form.

Examples of the water - insoluble pressure sensitive adhesive include acrylicbased pressure sensitive adhesives, rubber-based pressure sensitive adhesives, siliconebased pressure sensitive adhesives, vinylalkylether-based pressure sensitive adhesives, polyester-based pressure sensitive adhesives, polyamide-based pressure sensitive adhesives, urethane-based pressure sensitive adhesives, fluorine-based pressure sensitive adhesives, epoxy-based pressure sensitive adhesives and pressure sensitive adhesives containing latex or other synthetic resins. Methods for preparing the emulsion pressure sensitive adhesive include a method of emulsion polymerization of monomers of a pressure sensitive adhesive (an adhesive polymer compound) and a method using a previously emulsified polymer as a main component. In the former method of emulsion polymerization, monomers, an emulsifier (a surfactant) and a polymerization initiator are mixed in an aqueous solvent to promote polymerization reaction. As a result, a water dispersion type polymer (an emulsion) can be obtained.

A rubber-based emulsion pressure sensitive adhesive using latex rubber comprises emulsified latex rubber and an emulsified tackifier. Examples of the latex rubber include natural rubber, chloroprene rubber, SBR (styrene-butadiene rubber), butadiene rubber, NBR (acrylonitrile-butadiene rubber), MBR (methyl methacrylate butadiene rubber) and EVA (ethylene vinyl acetate copolymer). Examples of the tackifier include rosin resin; terpene resin; aliphatic hydrocarbon resin; alicyclic hydrocarbon resin; aromatic hydrocarbon resin; coumarone resin; and copolymers, modified resins and hydrogenated resins thereof. The latex rubber may preferably be contained in an amount of 30% by mass or more and 80% by mass or less relative to 100% by mass of the rubber-based emulsion pressure sensitive adhesive.

An acrylic copolymer constituting an acrylic emulsion pressure sensitive adhesive may be produced by, for example, obtaining a copolymer by emulsion polymerization of two or more kinds of acrylic polymerizable compounds. More specifically, the acrylic emulsion pressure sensitive adhesive may be produced by polymerizing (a) a (meth)acrylic acid alkyl ester having an alkyl group having 4 or more and 12 or less carbon atoms, (b) a carboxyl group-containing monomer and (c) a monomer mixture containing a copolymerizable monomer.

Examples of (a) the (meth)acrylic acid alkyl ester having an alkyl group having 4 or more and 12 or less carbon atoms include butyl acrylate, n-hexyl acrylate, 2-ethylhexyl acrylate, isooctyl acrylate, lauryl methacrylate and isodecyl acrylate.

Examples of (b) the carboxyl group-containing monomer include (meth)acrylic acid, crotonic acid, fumaric acid, itaconic acid, maleic acid, citraconic acid and 2-carboxyethyl methacrylate.

Examples of (c) the copolymerizable monomer include methyl (meth)acrylate, ethyl acrylate, 2-methoxyethyl acrylate, 2-(2-ethoxyethoxy) ethyl acrylate, tridecyl acrylate, tridecylmethacrylate, cyclohexyl acrylate, isobonyl acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, vinyl alcohol, allyl alcohol, (meth)acrylamide, N,N-dimethyl (meth)acrylamide, N-butyl (meth)acrylamide, N-methylol (meth)acrylamide, N-methylolpropane (meth)acrylamide, N-methoxymethyl (meth)acrylamide, N-butoxymethyl (meth)acrylamide, a secondary amino group-containing (meth)acrylate monomer, a tertiary amino group-containing (meth)acrylate monomer, a tertiary amino group-containing N-substituted (meth)acrylamide monomer in which a substituent containing a tertiary amino group is bonded to a nitrogen atom of an amide group, glycidyl (meth)acrylate, methylglycidyl (meth)acrylate, allyl glycidyl ether, acrylonitrile, methacrylonitrile, diacetone (meth)acrylamide, acetone (meth)acrylate, vinyl methyl ketone, vinyl ethyl ketone, allylacetoacetate, vinyl acetate, styrene, acetoacetyl (meth)acrylate, N-vinyl-2-pyrrolidone, N-methylvinylpyrrolidone, N-vinylpiperidone, N-vinylpiperazine, N-vinylpyrazine, N-vinylpyrrole, N-vinylimidazole, N-vinylmorpholine, N-vinylcaprolactam, N-(meth)acryloylmorpholine, 3-(meth)acryloxypropyltrimethoxysilane, 3-(meth)acryloxypropyltriethoxysilane, 3-acryloxypropyltriethoxysilane, 3-(meth)acryloxypropylmethyldimethoxysilane, 3-(meth)acryloxypropylmethyldiethoxysilane 2-(acetoacetoxy)ethyl(metha)acrylate, 2-(meth)acryloxyethyltrimethoxysilane, 2-(meta)acryloxyethyltriethoxysilane, γ-(meth)acryloxypropyltrichlorosilane, γ-(meth)acryloxypropylmethyldichlorosilane, γ-(meth)acryloxypropyldimethylchlorosilane, γ-(meth)acryloxypropyltripropoxysilane, γ-(meth)acryloxypropylmethyldipropoxysilane, γ-(meth)acryloxypropyltributoxysilane, (meth)acryloxypentyltrimethoxysilane, (meth)acryloxyhexyltrimethoxysilane, (meth)acryloxyhexyltriethoxysilane, (meth)acryloxyoctyltrimethoxysilane, (meth)acryloxydecyltrimethoxysilane, (meth)acryloxydodecyltrimethoxysilane, (meth)acryloxyoctadecyltrimethoxysilane, vinyltrimethoxysilane, vinyltriethoxysilane, vinyltripropoxysilane, vinylmethyldimethoxysilane, vinylmethyldiethoxysilane, and vinylmethyldipropoxysilane.

(a) The (meth)acrylic acid alkyl ester having an alkyl group having 4 or more and 12 or less carbon atoms may preferably be contained in an amount of 50% by mass or more and 99.5% by mass or less relative to 100% by mass of the monomer mixture. (b) The carboxyl group-containing monomer may preferably be contained in an amount of 0.5% by mass or more and 10% by mass or less relative to 100% by mass of the monomer mixture. (c) The copolymerizable monomer may preferably be contained in an amount of 0% by mass or more and 40% by mass or less relative to 100% by mass of the monomer mixture.

The copolymer may preferably be contained in an amount of 40% by mass or more and 97% by mass or less, and more preferably 50% by mass or more and 90% by mass or less, in the pressure sensitive adhesive layer from the viewpoint of balancing the flocculation properties and the adhesive force.

Particles of the copolymer may preferably have an average diameter of 30 nm or more and 1000 nm or less, and more preferably 100 nm or more and 400 nm or less, from the viewpoint of ensuring the adhesive force to a trunk or stem of a tree.

The acrylic emulsion pressure sensitive adhesive may include tackifiers such as rosin resin; terpene resin; aliphatic hydrocarbon resin; alicyclic hydrocarbon resin; aromatic hydrocarbon resin; coumarone resin; and copolymers, modified resins and hydrogenated resins thereof.

The pressure sensitive adhesive layer 12 may preferably have a thickness of 10 $\mu$m or more and 300 $\mu$m or less, and more preferably 15 $\mu$m or more and 150 $\mu$m or less.

Considering that the pressure sensitive adhesive layer needs to closely adhere to an uneven surface of a leaf and stem of a plant for a long period of time and that the pressure sensitive adhesive layer needs to have adhesiveness to the back surface of the substrate, the pressure sensitive adhesive layer may preferably have an adhesive force of 0.5 N/10 mm or more, and more preferably 1.0 N/10 mm or more, against BA-SUS (a bright annealed stainless steel plate).

The pressure sensitive adhesive layer 12 may be composed of a single pressure sensitive adhesive layer or may have a structure in which a plurality of pressure sensitive adhesive layers is laminated. In the case that the pressure sensitive adhesive layer 12 is formed by laminating a plurality of pressure sensitive adhesive layers, the pressure sensitive adhesive layers may be of different types.

The pressure sensitive adhesive layer 12 may optionally contain additives that may generally be formulated in pressure sensitive adhesive layers such as a liquid rubber, a crosslinker, a softener (a plasticizer), a pH adjuster, an oxidation inhibitor (an antioxidant, an antiseptic agent), a filler, an ultraviolet absorber, a photostabilizer, a colorant, a surfactant and a thickener.

(Agrochemical)

The agrochemical is not particularly limited as long as it is systemic and acts on plants, diseases or pests. In view of the influence not only on target plants but also on the environment and other plants and animals, it is preferable to use chemical agents that are registered as agrochemicals.

According to Agricultural Chemicals Regulation Act in Japan, the term "agricultural chemicals (agrochemicals)" is defined to mean "bactericides, insecticides, herbicides and other chemicals to be used for controlling bacteria, nematodes, mites, insects, rats, weeds, or other animals or plants or viruses (hereinafter referred to collectively as "pests") that harm crops (including trees, and agricultural and forestry products; hereinafter referred to as "crops, etc.") (those bactericides, insecticides, herbicides and other chemicals include substances specified by Cabinet Order among those in which the bactericides, insecticides, herbicides and other chemicals are used as their materials or ingredients, and which are used for that control), and growth stimulants, germination inhibitors and other chemicals that are used for enhancing or inhibiting the physiology of crops, etc." Agricultural Chemicals Regulation Act also sets forth "Natural enemies used for the control of pests that harm crops, etc. are deemed to be agricultural chemicals."

Concrete examples of the "agricultural chemicals" include insecticides (chemical agents for controlling pests that harm crops), bactericides (chemical agents for controlling diseases that harm crops), insecticidal and bactericidal agents (chemical agents for simultaneously controlling pests and diseases of crops), herbicides (chemical agents for controlling weeds), rodenticides (chemical agents for controlling wild rats, etc. that harm crops), plant growth regulators (chemical agents for promoting or inhibiting the growth of crops), attractants (chemical agents for mainly attracting pests with odor, etc.), spreading agents (chemical agents used in admixture with an agrochemical to increase the adhesiveness of the agrochemical), natural enemies (natural enemies of pests that harm crops),and microbiological agents (agents that use microorganisms to control pests, diseases, etc. that harm crops). Among these, the present agrochemical-containing pressure sensitive adhesive tape may especially use systemic insecticides, bactericides, insecticidal and bactericidal agents, herbicides, and plant growth regulators.

Agrochemicals need to be applied in an amount appropriately adjusted depending on the types of plants. For example, considering the effects on plants, a herbicide may preferably be applied in an amount of 0.0002 mg/cm$^2$ or more and less than 10 mg/cm$^2$, and more preferably 0.0006 mg/cm$^2$ or more and less than 5.0 mg/cm$^2$ per 1 cm$^2$ of the bark. It is preferable to adjust the concentration and amount of a herbicide such that the herbicide is contained in an amount described above.

(Release liner)

The agrochemical-containing pressure sensitive adhesive tape 10 of the present disclosure may include a release liner attached on its surface on the pressure sensitive adhesive layer side. Examples of the release liner to be attached include plastic films made of polyethylene terephthalate (PET), polybutylene terephthalate, polyethylene naphthalate, cast polypropylene, oriented polypropylene, polyethylene, polyurethane, polyvinyl chloride and polystyrene; processed sheets obtained by applying release treatment on the plastic films above; paper; laminated sheets formed by laminating paper with plastic films made of polyethylene, polypropylene and the like and processed sheets obtained by applying release treatment on these plastic films; and laminated films or sheets formed by laminating the films or sheets mentioned above on each other. These may be colorless or colored.

The thickness of the release liner is not particularly limited. The release liner may preferably have a thickness of 10 $\mu$m or more and 500 $\mu$m or less, more preferably 20 $\mu$m or more and 300 $\mu$m or less, and still more preferably 40 $\mu$m or more and 200 $\mu$m or less.

In addition, the agrochemical-containing pressure sensitive adhesive tape 10 of the present disclosure may be sealed in a bag from the viewpoint of the storage stability of a product.

The agrochemical-containing pressure sensitive adhesive tape 10 of the present disclosure can be obtained by: mixing an emulsion pressure sensitive adhesive and an agrochemical that are components of the pressure sensitive adhesive layer 12 to prepare a composition for pressure sensitive adhesive layer; and coating and drying the composition on the substrate 11. The pressure sensitive adhesive layer used in the present embodiment may contain additives to promote the stability of the agrochemical in the pressure sensitive adhesive layer and the permeability of the agrochemical when attached to a target.

The agrochemical may preferably be contained in the pressure sensitive adhesive layer at a concentration of 0.01% by mass or more and 30% by mass or less, more preferably 0.1% by mass or more and 25% by mass or less, and still more preferably 1% by mass or more and 20% by mass or less, relative to 100% by mass of the pressure sensitive adhesive composition.

Further, the pressure sensitive adhesive layer 12 may preferably be applied in an amount of 10 g/m$^2$ or more and 300 g/m$^2$ or less, and more preferably 15 g/m$^2$ or more and 150 g/m$^2$ or less in view of the permeability and transferability of the agrochemical.

[How to use the agrochemical-containing pressure sensitive adhesive tape]

The agrochemical-containing pressure sensitive adhesive tape 10 of the present disclosure is used by attaching or winding the pressure sensitive adhesive layer 12 around a trunk, stem or leaf of a plant or tree so as to closely adhere thereto and leaving it to stand for a desired number of days until it exhibits the effects.

The agrochemical-containing pressure sensitive adhesive tape 10 may be attached or wound at any position on a stem or trunk which is appropriately selected without particular limitation.

Since the agrochemical-containing pressure sensitive adhesive tape of the present disclosure can be used only by attaching or winding the adhesive sheet that is provided with an agrochemical around a trunk or stem, it is possible to save labor and time for diluting and spraying the agrochemical. Further, the agrochemical can exhibit the effects only on a plant on which the tape is attached.

In addition, since the agrochemical-containing pressure sensitive adhesive tape of the present disclosure works efficiently in a small amount compared with an agrochemical solution having a concentration similar to those of conventional spraying methods, it is possible to reduce contamination of soil, drift to the surroundings, and exposure to workers.

Furthermore, since the agrochemical-containing pressure sensitive adhesive tape of the present disclosure uses an emulsion-type pressure sensitive adhesive as a pressure sensitive adhesive, a portion of a stem or leaf of a plant on which the tape is attached is sealed. Hence, moisture emitted from the plant cannot be released into the atmosphere, so that the humidity between the pressure sensitive adhesive layer and the plant increases. The present inventors consider that this moisture (the humidity) enables the agrochemical contained in the pressure-sensitive adhesive to efficiently transfer and permeate into plants. In other words, the agrochemical-containing pressure sensitive adhesive tape of the present disclosure contains an emulsion pressure sensitive adhesive, which is an aggregate of adhesive fine particles, and the emulsion pressure sensitive adhesive provides a larger surface area to increase the contact with the moisture compared with a pressure sensitive adhesive dissolved in a solvent and applied even if they have the same composition. As a result, the agrochemical-containing pressure sensitive adhesive tape of the present disclosure achieves efficient administration of an agrochemical to plants.

Particularly, in the attempt to add an agrochemical to a pressure sensitive adhesive layer to provide the pressure sensitive adhesive layer with both the adhesive function and the efficacy of the agrochemical, there are some cases where it is not possible to add an agrochemical in a desired amount to a pressure sensitive adhesive layer due to the compatibility between the agrochemical and the materials of the pressure sensitive adhesive layer. Still, due to recent advances in agrochemicals, agrochemicals can exhibit effects even in a small amount, thereby reducing contamination of soil, drift to the surroundings and exposure to workers.

[Examples]

Hereinafter, examples of the present disclosure will be described.

Substrates, materials of pressure sensitive adhesive layers, target plants and agrochemicals (herbicides) used in the examples and comparative examples are described below.

(1) Substrate:

- PET (polyethylene terephthalate, thickness: 25 μm)
- Cellulose (cellophane, thickness: 35 μm)

(2) Pressure sensitive adhesive layer:

(2-1) Acrylic emulsion pressure sensitive adhesive

- Acrylic emulsion pressure sensitive adhesive I (2-ethylhexyl acrylate [2-EHA] based)
- Acrylic emulsion pressure sensitive adhesive II (n-butyl acrylate [BA] based)

(2-2) Rubber-based emulsion pressure sensitive adhesive

- Rubber-based emulsion pressure sensitive adhesive I (a mixture of latex rubber [chloroprene rubber, trade name "SKYPRENE, registered trademark, GFL890", manufactured by Tosoh Corporation] and a rosin ester tackifier [trade name "AQUATAC XR-4343", manufactured by Kraton Corporation])
- Rubber-based emulsion pressure sensitive adhesive II (a mixture of latex rubber [chloroprene rubber, trade name "Showa Denko Chloroprene, registered trademark, 654", manufactured by Showa Denko K.K.] and a rosin ester tackifier [trade name "SUPER ESTER E720", manufactured by ARAKAWA CHEMICAL INDUSTRIES, LTD.])

(2-3) Hot melt adhesive

a mixture of Styrene-Isoprene-Styrene (SIS, trade name "Quintac 3421", manufactured by Zeon Corporation) and a rosin ester tackifier (trade name "SUPER ESTER A115", manufactured by ARAKAWA CHEMICAL INDUSTRIES, LTD.)
a mixture of Styrene-Isoprene-Styrene (SIS, trade name "Quintac 3421", manufactured by Zeon Corporation) and a terpene phenol tackifier (trade name "YS POLYSTER T115", manufactured by YASUHARA CHEMICAL CO., LTD.)
Acrylic pressure sensitive adhesive (hot melt type, solvent free, trade name "POLYTHICK AH-300" manufactured by Sanyo Chemical Industries, Ltd.)
- Naphthenic oil (trade name "SUNPURE NX90" manufactured by JAPAN SUN OIL COMPANY, LTD.)

(3) Target plants: Camellia, Japanese kudzu
(4) Agrochemical:

(4-1) Herbicide

- Imazapyr (ALS inhibitor)
- Glyphosate (EPSP synthase inhibitor)

(4-2) Insecticide

- Dinotefuran (neonicotinoid pest control agent)

[Example 1]

First, an acrylic emulsion pressure sensitive adhesive I (2-EHA based) is mixed with a herbicide to prepare a composition for pressure sensitive adhesive layer having an agrochemical concentration of 5% by mass. The composition for pressure sensitive adhesive layer was applied and dried on a substrate to prepare an agrochemical-containing pressure sensitive adhesive tape on which the pressure sensitive adhesive was applied in an amount of 30 g/m$^2$.

[Example 2]

An agrochemical-containing pressure sensitive adhesive tape was prepared in the same manner as in Example 1, except that an acrylic emulsion pressure sensitive adhesive II (BA based) was used as a pressure sensitive adhesive.

[Example 3]

A rubber-based emulsion pressure sensitive adhesive I is mixed with a herbicide to prepare a composition for pressure sensitive adhesive layer having an agrochemical concentration of 1% by mass. The composition for pressure sensitive adhesive layer was applied and dried on a substrate to prepare an agrochemical-containing adhesive tape on which the pressure sensitive adhesive was applied in an amount of 30 g/m$^2$.

[Comparative Example 1]

Materials of a pressure sensitive adhesive layer (SIS, a rosin ester tackifier and naphthenic oil) were melt-mixed using a Labo Plastomill (registered trademark) manufactured by Toyo Seiki Seisaku-sho, Ltd. Then, an agrochemical was added thereto to prepare a composition for pressure sensitive adhesive layer having an agrochemical concentration of 7% by mass. The composition for pressure sensitive adhesive layer was applied on a substrate to prepare an agrochemical-containing pressure sensitive adhesive tape on which a pressure sensitive adhesive was applied in an amount of 150 g/m$^2$.

[Comparative Example 2]

Materials of a pressure sensitive adhesive layer (SIS, terpene phenol resin and naphthenic oil) were melt-mixed using a Labo Plastomill (registered trademark) manufactured by Toyo Seiki Seisaku-sho, Ltd. Then, an agrochemical was added thereto to prepare a composition for pressure sensitive adhesive layer having an agrochemical concentration of 7% by mass. The composition for pressure sensitive adhesive layer was applied on a substrate to prepare an agrochemical-containing pressure sensitive adhesive tape on which a pressure sensitive adhesive was applied in an amount of 150 g/m$^2$.

[Comparative Example 3]

An acrylic pressure sensitive adhesive (POLYTHICK AH-300) (hot melt type) and an agrochemical were mixed using a Labo Plastomill (registered trademark) manufactured by Toyo Seiki Seisaku-sho, Ltd. to prepare a composition for pressure sensitive adhesive layer having an agrochemical concentration of 7% by mass. The composition for pressure sensitive adhesive layer was applied on a substrate to prepare an agrochemical-containing pressure sensitive adhesive tape on which the pressure sensitive adhesive was applied in an amount of 150 g/m$^2$.

For Examples 1 to 3 and Comparative Examples 1 to 3 described above, the ease of release of the agrochemical from the pressure sensitive adhesive layer was evaluated as "the release rate after 24 h (hour)". In addition, for Examples 1 to 3 and Comparative Examples 1 to 3, the adhesive force of the pressure sensitive adhesive layer was measured. The evaluation procedure is as follows. Evaluation results are given in Table 1.

(Release rate after 24 h)

1. The pressure sensitive adhesive tape was punched into a piece having a diameter of 20 mmφ. The piece was fixed to the bottom of a brown glass sample bottle having a diameter of 27 mmφ using a silicone pressure sensitive adhesive with the adhesion surface of the tape faced upward. Then, 10 mL of ultrapure water (pH 6.5 to 7.3) was added and stirred at 75 to 100 rpm using a stirring blade while keeping the water temperature around 23°C.
2. At predetermined intervals, 1 mL of test solution was sampled therefrom, and 1 mL of water was newly added at each time of sampling.
3. Sampling time was 2 hours, 4 hours, 6 hours and 24 hours. Each sampling solution was analyzed by High Performance Liquid Chromatography (HPLC). Incidentally, the samplings at 2 hours, 4 hours and 6 hours prior to the sampling time of 24 hours were performed when appropriate (The same shall apply hereinafter.).
4. A calibration curve was prepared using an imazapyr standard reagent manufactured by FUJIFILM Wako Pure Chemical Corporation as a standard reagent, and the amount of imazapyr in each sampling solution was quantified under the following conditions.

<Analysis conditions>

Mobile phase: $H_2O$/acetonitrile/phosphate = 80/20/0.04 vol.
Column: TSgel ODS-100z, 5 μm, 4.6 mm × 25 cm
Column temperature: 40°C
Flow rate: 1.0 mL/min
Injection volume: 10 to 40 μL

(Adhesive force)

The agrochemical-containing pressure sensitive adhesive tape was left to stand at 23°C and 50% RH (relative humidity) for 24 hours or more and cut into a test piece having a width of 10 mm and a length of 10 cm. The test piece was attached to a stainless steel plate having been subjected to BA (bright anneal) treatment and pressure-bonded thereto using a pressure-bonding roller having a mass of 1 kg in accordance with the 180-degree peel test against a BA-SUS plate (bright annealed stainless steel) defined in JIS Z0237. After the pressure-bonding by the roller, the test piece was peeled off at a peel angle of 180° and at a rate of 300 mm/min to measure the force at that time.

[Table 1]

| | Example 1 | Example 2 | Example 3 | Comparative example 1 | Comparative example 2 | Comparative example 3 |
|---|---|---|---|---|---|---|
| Agrochemical tested | Imazapyr | | | | | |
| Substrate | PET (Thickness: 25 μm) | | | | | |
| Pressure sensitive adhesive | Emulsion type | | | Hot melt type | | |
| | Acrylic emulsion pressure sensitive adhesive I | Acrylic emulsion pressure sensitive adhesive II | Rubber-based emulsion pressure sensitive adhesive I | SIS/Rosin ester tackifier | SIS/Terpene phenol tackifier | Acrylic pressure sensitive adhesive |
| | (2-EHA based) | (BA based) | | | | (POLYTHICK AH-300) |
| Agrochemical concentration | 5 wt% | 5 wt% | 1 wt% | 7 wt% | 7 wt% | 7 wt% |
| Application amount of pressure sensitive adhesive | 30 g/m² | | | 150 g/m² | | |
| Release rate after 24 h | 41.70% | 66.50% | 44.00% | 3.90% | 3.00% | 8.00% |
| Adhesive force N/10 mm | 1.1 | 3.2 | 1.4 | 18.9 | 17.4 | 15.8 |

As shown in Table 1, it was found that the agrochemical-containing pressure sensitive adhesive tapes of the present disclosure using the emulsion-type pressure sensitive adhesives each had a significantly higher release rate than Comparative Examples 1 to 3 using the hot-melt-type pressure sensitive adhesives.

Next, practical tests of the agrochemical-containing pressure sensitive adhesive tapes of the present disclosure were conducted.

[Example 4]

PET (thickness: 25 μm) was used as a substrate and the acrylic emulsion pressure sensitive adhesive II (BA based) was used as a pressure sensitive adhesive to prepare an agrochemical-containing pressure sensitive adhesive tape that contains an agrochemical in an amount of 0.9 mg per 1 cm² in the same manner as described above.

[Example 5]

An agrochemical-containing pressure sensitive adhesive tape was prepared in the same manner as in Example 4, except that the agrochemical was contained in an amount of 0.6 mg per 1 cm$^2$.

[Example 6]

An agrochemical-containing pressure sensitive adhesive tape was prepared in the same manner as in Example 4, except that the agrochemical was contained in an amount of 0.1 mg per 1 cm$^2$.

[Comparative example 4]

In Comparative example 4, an SIS/Rosin ester tackifier was used as a pressure sensitive adhesive layer. The pressure sensitive adhesive layer was prepared by heatmelting SIS, a rosin ester tackifier, naphthenic oil and an agrochemical using a Labo Plastomill. This pressure sensitive adhesive composition was applied on a PET substrate (thickness: 25 μm) to prepare an agrochemical-containing pressure sensitive adhesive tape.

[Practical test]

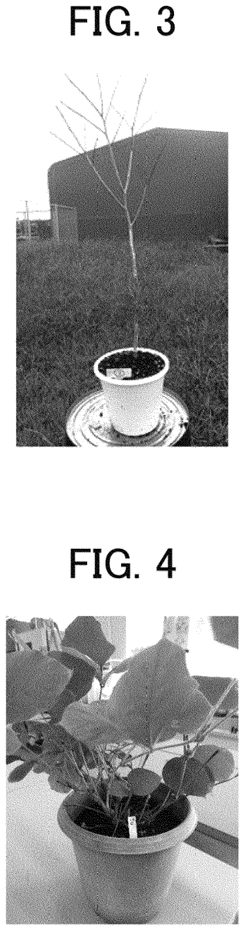

For Examples 4 to 6 and Comparative example 4 described above, a practical test was conducted in the following procedure. Evaluation to be described later was made before and after the test. Evaluation results are given in Table 2. FIG. 2 is a photograph of a camellia before the test of Example 4. FIG. 3 is a photograph of the camellia after the test.

1. The agrochemical-containing pressure sensitive adhesive tapes of Examples 4 to 6 and Comparative Example 4 were each wound around a camellia at a position apart from the soil surface by about 2 to 3 cm.
2. The surface of each agrochemical-containing pressure sensitive adhesive tape was covered with aluminum foil to prevent deterioration of the pressure sensitive adhesive and the agrochemical due to light.
3. Test period: from June 16, 2019 to September 5, 2019

(Growth rate [height] %)

The height of the camellia was measured before and after the test, and the growth rate (height) % was obtained from the following formula.

$$\text{(Height of tree after test - Height of tree before test) / Height of tree before test} \times 100$$

(Growth rate [tree diameter] %)

The maximum diameter of the stem of the camellia at a position apart from the ground surface by 2 to 3 cm was measured before and after the test, and the growth rate (tree diameter) % was obtained from the following formula.

$$\text{(Maximum diameter of tree after test - Maximum diameter of tree before test) / Maximum diameter of tree before test} \times 100$$

(Sprout)

The presence or absence of sprouts was confirmed for the whole camellia, and evaluation was made in accordance with the following criteria.

A: There are no sprouts.
B: There is a sign of sprouting.
C: One or more sprouts (leaves) have come out.

(Condition of remaining leaves)

The condition of the leaves of the camellia was observed and evaluated in accordance with the following criteria.

A: 80% or more of the leaves of the whole tree are discolored.
B: 50% or more and less than 80% of the leaves of the whole tree are discolored.
C: Less than 50% of the leaves of the whole tree are discolored.

(Defoliation rate [%])

The defoliation rate was obtained by the following formula.

$$\text{(Number of leaves before test - Number of leaves after test) / Number of leaves before test} \times 100$$

[Table 2]

| | Example 4 | Example 5 | Example 6 | Comparative example 4 |
|---|---|---|---|---|
| Pressure sensitive adhesive | Emulsion type | | | Hot melt type |
| | Acrylic emulsion pressure sensitive adhesive II (BA based) | | | SIS/Rosin ester tackifier |
| Target plant | Camellia | | | |
| Substrate | PET (25 μm) | | | |
| Chemical agent | Imazapyr | | | |
| Application amount of pressure sensitive adhesive | 150 g/m$^2$ | | | |
| Area of attachment | 22.5 cm$^2$ (1.5 × 5 cm × 3 tapes) | | | |
| Agrochemical concentration | 6 wt% | 4 wt% | 0.68 wt% | 4 wt% |
| Amount of agrochemical | 20.25 mg | 13.5 mg | 2.25 mg | 13.5 mg |
| per cm$^2$ | 0.9 mg | 0.6 mg | 0.1 mg | 0.6 mg |
| Release rate after 24 h | 58% | 55% | 63% | 5% |
| Defoliation rate | 100% | 100% | 74.20% | 56.00% |
| Number of leaves (before test -> after test) | 55 -> 0 | 32 -> 0 | 31 -> 8 | 75 -> 33 |
| Growth rate (height) | -7% | -6% | -4% | -6% |
| Growth rate (tree diameter) | 7% | 3% | 10% | 4% |
| Sprout | A | A | A | A |
| Condition of remaining leaves (discoloration) | No remaining leaves | No remaining leaves | B | A |
| Adhesive force N/10 mm | 9.7 | 8.4 | 6.7 | 17.2 |

As shown in Table 2, it was found that Examples 4, 5, and 6 using an emulsion pressure sensitive adhesive efficiently caused trees to wither and die or inhibited the growth of the trees compared with Comparative Example 4 using a hot-melt-type rubber-based pressure sensitive adhesive. The present inventors consider that this is because a pressure sensitive adhesive containing an emulsion pressure sensitive adhesive can keep moisture emitted from a plant between a pressure sensitive adhesive layer and the plant and this moisture enables a herbicide to efficiently transfer and permeate into plants.

Next, agrochemical-containing pressure sensitive adhesive tapes having specifications different from those described above were prepared (Examples 7 and 8 and Comparative example 5). The release rate after 24 h and the adhesive force were measured, and a practical test was conducted for each tape by using Japanese kudzu as a target plant. Evaluation results are given in Table 3.

[Example 7]

An agrochemical-containing pressure sensitive adhesive tape was prepared in the same manner as in Example 2, except that the substrate was changed from PET to cellophane and the agrochemical concentration was 10% by mass.

[Example 8]

An agrochemical-containing pressure sensitive adhesive tape was prepared in the same manner as in Example 7, except that the agrochemical was glyphosate.

[Comparative Example 5]

An agrochemical-containing pressure sensitive adhesive tape was prepared in the same manner as in Example 7, except that no agrochemical was added.

Next, for Example 7 and Example 8 described above, the release rates after 24 h of imazapyr and glyphosate were measured.

(Release rate after 24 h)

(1) Release rate after 24 h of imazapyr

The release rate after 24 h of imazapyr was measured for the agrochemical-containing pressure sensitive adhesive tape of Example 7.

1. The pressure sensitive adhesive tape was punched into a piece having a diameter of 15 mmφ. The piece was fixed to the side surface of a brown glass sample bottle having a diameter of 30 mmφ using a silicone pressure sensitive adhesive with the adhesion surface of the tape exposed. Then, 20 mL of ultrapure water (pH 6.5 to 7.3) was added and stirred at 150 rpm using a stirrer while keeping the water temperature around 23°C.
2. At predetermined intervals, 1 mL of test solution was sampled therefrom, and 1 mL of water was newly added at each time of sampling.
3. Sampling time was 10 minutes, 30 minutes, 1 hour, 4 hours and 24 hours. Each sampling solution was analyzed by HPLC.
4. A calibration curve was prepared using an imazapyr standard reagent manufactured by FUJIFILM Wako Pure Chemical Corporation as a standard reagent, and the amount of imazapyr in each sampling solution was quantified under the following conditions.

<Analysis conditions>

Mobile phase: $H_2O$/acetonitrile/phosphate = 80/20/0.04 vol.
Column: TSgel ODS-100z, 5 $\mu$m, 4.6 mm $\times$ 25 cm
Column temperature: 40°C
Flow rate: 1.0 mL/min
Injection volume: 10 $\mu$L

(2) Release rate after 24 h of glyphosate

The release rate after 24 h was measured for the agrochemical-containing pressure sensitive adhesive tape of Example 8.

1. The pressure sensitive adhesive tape was punched into a piece having a diameter of 15 mmcp. The piece was fixed to the side surface of a brown glass sample bottle having a diameter of 50 mmcp using a silicone pressure sensitive adhesive with the adhesion surface of the tape exposed. Then, 100 mL of ultrapure water (pH 6.5 to 7.3) was added and stirred at 150 rpm using a stirrer while keeping the water temperature around 23°C.

2. At predetermined intervals, 1 mL of test solution was sampled therefrom, and 1 mL of water was newly added at each time of sampling.

3. Sampling time was 10 minutes, 30 minutes, 1 hour, 4 hours and 24 hours. Each sampling solution was analyzed by HPLC.

4. A calibration curve was prepared using a glyphosate standard reagent manufactured by FUJIFILM Wako Pure Chemical Corporation as a standard reagent, and the amount of glyphosate in each sampling solution was quantified under the following conditions.

<Analysis conditions>

Mobile phase:

A: Acetonitrile
B: 50 mM Phosphate buffer

Liquid feed: A/B = 35/65 vol.
Column: Mightysil RP-18 GP, 5 $\mu$m, 4.6 mm $\times$ 15 cm
Column temperature: 40°C
Flow rate: 0.7 mL/min
Injection volume: 5 $\mu$L

(Adhesive force)

The adhesive forces of the agrochemical-containing pressure sensitive adhesive tapes of Example 7, Example 8 and Comparative Example 5 were measured in the same manner as in Example 1.

[Practical test]

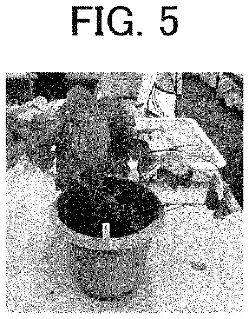

For Examples 7 and 8 and Comparative example 5 described above, a practical test was conducted in the following procedure. Evaluation to be described later was made before and after the test. Evaluation results are given in Table 3. FIG. 4 is a photograph of Japanese kudzu before the test of Example 7. FIG. 5 is a photograph of the Japanese kudzu after the test.

1. The agrochemical-containing pressure sensitive adhesive tapes of Example 7, Example 8 and Comparative Example 5 were each wound around Japanese kudzu at a position apart from the foot of the Japanese kudzu by about 2 cm.

2. Test period: from August 19, 2020 to September 16, 2020

(Condition of remaining leaves)

The condition of the leaves of the Japanese kudzu was observed and evaluated in accordance with the following criteria.

A: 80% or more of the leaves of the whole are discolored.
B: 50% or more and less than 80% of the leaves of the whole are discolored.
C: Less than 50% of the leaves of the whole are discolored.

(Condition of vines)

The condition of the vines of the whole Japanese kudzu was confirmed and evaluated in accordance with the following criteria.

a: 80% or more of the whole vines are discolored and wilting.
b: 30% or more and less than 80% of the whole vines are discolored and almost wilting.

c: Less than 30% of the whole vines are discolored.

(Growth inhibition)

The degree of growth of the vines was evaluated in accordance with the following criteria.

a: Vines have not grown.
b: There is a sign of growth of vines.
c: Vines have grown.

(Sprout)

The presence or absence of sprouts was confirmed for the whole Japanese kudzu, and evaluation was made in accordance with the following criteria.

A: There are no sprouts.
B: There is a sign of sprouting.
C: One or more sprouts (leaves) have come out.

[Table 3]

| | Example 7 | Example 8 | Comparative example 5 |
|---|---|---|---|
| Pressure sensitive adhesive | Emulsion type | | |
| | Acrylic emulsion pressure sensitive adhesive II (BA based) | | |
| Target plant | Japanese kudzu | | |
| Substrate | Cellophane | | |
| Chemical agent | Imazapyr | Glyphosate | - |
| Area of attachment | 20 cm$^2$ | | |
| Agrochemical concentration | 10 wt% | | - |
| Application amount of pressure sensitive adhesive | 30 g/m$^2$ | | |
| Amount of agrochemical | 6 mg | | - |
| per cm$^2$ | 0.3 mg | | - |
| Release rate after 24 h | 92% | 95% | - |
| Condition of remaining leaves (discoloration) | A | A | C |
| Condition of vines (discoloration) | a | a | c |
| Growth inhibition (length of vines) | a | a | c |
| Sprout | A | A | C |
| Adhesive force N/10 mm | 6.1 | 4.7 | 5.5 |

As shown in Table 3, it was found that, even in the case that the agrochemical was changed to glyphosate, the agrochemical-containing pressure sensitive adhesive tapes of the present disclosure released the agrochemical well. In addition, it was found that the agrochemical-containing pressure sensitive adhesive tapes of the present disclosure also achieved good results even when applied to Japanese kudzu. Further, an environmentally friendly agrochemical-containing pressure sensitive adhesive tape can be obtained by using cellophane as a substrate while ensuring a good herbicidal effect because cellophane is biodegradable.
Next, agrochemical-containing pressure sensitive adhesive tapes using a rubber-based emulsion pressure sensitive adhesive as a pressure sensitive adhesive (Examples 9 to 14 and Comparative Example 6) were prepared and evaluated.

[Example 9]

An agrochemical-containing pressure sensitive adhesive tape was prepared in the same manner as in Example 3, except that the pressure sensitive adhesive was changed to the rubber-based emulsion pressure sensitive adhesive II.

[Example 10]

An agrochemical-containing pressure sensitive adhesive tape was prepared in the same manner as in Example 9, except that the application amount of the pressure sensitive adhesive was changed to 150 g/m$^2$.

[Example 11]

An agrochemical-containing pressure sensitive adhesive tape was prepared in the same manner as in Example 9, except that the agrochemical concentration was changed to 5% by mass.

[Example 12]

An agrochemical-containing pressure sensitive adhesive tape was prepared in the same manner as in Example 11, except that the application amount of the pressure sensitive adhesive was changed to 150 g/m$^2$.

[Example 13]

An agrochemical-containing pressure sensitive adhesive tape was prepared in the same manner as in Example 9, except that the agrochemical concentration was changed to 10% by mass.

[Example 14]

An agrochemical-containing pressure sensitive adhesive tape was prepared in the same manner as in Example 13, except that the application amount of the pressure sensitive adhesive was changed to 150 g/m$^2$.

[Comparative Example 6]

An agrochemical-containing pressure sensitive adhesive tape was prepared in the same manner as in Example 9, except that no agrochemical was added.

(Release rate after 24 h and Adhesive force)

For Examples 9 to 14 and Comparative Example 6 described above, the release rate after 24 h and the adhesive force were measured in the same manners as those for the agrochemical-containing pressure sensitive adhesive tape of Example 1.

[Practical test]

For Examples 9 to 14 and Comparative Example 6, a practical test was conducted using camellia as a target plant.

   1. The agrochemical-containing pressure sensitive adhesive tapes of Examples 9 to 14 and Comparative Example 6 were each wound around a camellia at a position apart from the soil surface by about 2 to 3 cm.
   2. Test period: from January 9, 2021 to March 8, 2021
   3. The tests were conducted in a greenhouse because the test period was in winter and the growth of camellia was seasonally suppressed. The temperature inside the greenhouse was raised by a heater to 30°C from 7 a.m. to 6 p.m. on weekdays. The heater was turned off at night and on Saturdays and Sundays.

The growth rate (height)%, growth rate (tree diameter)%, sprout, condition of remaining leaves and defoliation rate (%) were evaluated in the same manners as those for the agrochemical-containing pressure sensitive adhesive tape of Example 4.

[Table 4]

| | Example 9 | Example 10 | Example 11 | Example 12 | Example 13 | Example 14 | Comparative example 6 |
|---|---|---|---|---|---|---|---|
| Pressure sensitive adhesive | Emulsion type | | | | | | |
| | Rubber-based emulsion pressure sensitive adhesive II | | | | | | |
| Target plant | Camellia | | | | | | |
| Substrate | PET | | | | | | |
| Chemical agent | Imazapyr | | | | | | - |
| Area of attachment | 20 cm$^2$ | | | | | | |
| Agrochemical concentration | 1 wt% | | 5 wt% | | 10 wt% | | - |
| Application amount of pressure sensitive adhesive | 30 g/m$^2$ | 150 g/m$^2$ | 30 g/m$^2$ | 150 g/m$^2$ | 30 g/m$^2$ | 150 g/m$^2$ | 30 g/m$^2$ |
| Amount of agrochemical | 0.6 mg | 3 mg | 3 mg | 15 mg | 6 mg | 30 mg | - |
| per cm$^2$ | 0.03 mg | 0.15 mg | 0.15 mg | 0.75 mg | 0.30 mg | 1.50 mg | - |
| Release rate after 24 h | 6% | 7% | 23% | 20% | 87% | 46% | - |
| Defoliation rate | 38% | 50% | 46% | 51% | 69% | 69% | 5% |
| Number of leaves (before test -> after test) | 44 -> 31 | 38 -> 20 | 45 -> 24 | 41 -> 21 | 33 -> 11 | 35 -> 10 | 37 -> 35 |
| Growth rate (height) | -2% | 0 | 0 | 0 | 2% | -5% | -1% |
| Growth rate (tree diameter) | -13% | -2% | -8% | -7% | -3% | -1% | 7% |
| Sprout | A | A | B | A | B | A | C |
| Condition of remaining leaves (discoloration) | B | B | B | A | B | B | C |
| Adhesive force N/10 mm | 3.8 | 8.4 | 4.2 | 10.1 | 4.3 | 9.0 | 5.5 |

As shown in Table 4, it was found that the agrochemical-containing pressure sensitive adhesive tapes of the present disclosure also achieved good results even when the pressure sensitive adhesive was a rubber-based emulsion pressure sensitive adhesive.

[Examples]

Next, agrochemical-containing pressure sensitive adhesive tapes were prepared using a different type of agrochemical, and the release rate after 24 h and the adhesive force were measured.

[Example 15]

An agrochemical-containing pressure sensitive adhesive tape was prepared in the same manner as in Example 2, except that the agrochemical used was dinotefuran (an insecticide), the agrochemical concentration was 10% by mass, and the application amount of the pressure sensitive adhesive was 150 g/m$^2$.

[Comparative Example 7]

An agrochemical-containing pressure sensitive adhesive tape was prepared in the same manner as in Comparative Example 3, except that the agrochemical used was dinotefuran (an insecticide) and the agrochemical concentration was 10% by mass.

For Example 15 and Comparative Example 7 described above, the release rate after 24 h and the adhesive force were measured in the following manners.

(Release rate after 24 h)

• Dinotefuran

1. The pressure sensitive adhesive tape was punched into a piece having a diameter of 15 mm$\varphi$. The piece was fixed to the side surface of a brown glass sample bottle having a diameter of 30 mmcp using a silicone pressure sensitive adhesive with the adhesion surface of the tape exposed. Then, 20 mL of ultrapure water (pH 6.5 to 7.3) was added and stirred at 150 rpm using a stirrer while keeping the water temperature around 23°C.
2. At predetermined intervals, 1 mL of test solution was sampled therefrom, and 1 mL of water was newly added at each time of sampling.
3. Sampling time was 10 minutes, 30 minutes, 1 hour, 4 hours and 24 hours. Each sampling solution was analyzed by HPLC.
4. A calibration curve was prepared using a dinotefuran standard reagent manufactured by FUJIFILM Wako Pure Chemical Corporation as a standard reagent, and the amount of dinotefuran in each sampling solution was quantified under the following conditions.

<Analysis conditions>

Mobile phase: $H_2O$/acetonitrile = 90/10 vol.
Column: TSgel ODS-100z, 5 $\mu$m, 4.6 mm $\times$ 25 cm
Column temperature: 40°C
Flow rate: 1.0 mL/min
Injection volume: 40 $\mu$L

(Adhesive force)

The adhesive force was measured in the same manner as that for the agrochemical-containing pressure sensitive adhesive tape of Example 1.

[Table 5]

| | Example 15 | Comparative example 7 |
|---|---|---|
| Pressure sensitive adhesive | Emulsion type | Hot melt type |
| | Acrylic emulsion pressure sensitive adhesive II (BA based) | Acrylic pressure sensitive adhesive |
| Substrate | PET | |
| Chemical agent | Dinotefuran (insecticide) | |
| Agrochemical concentration | 10 wt% | |
| Application amount of pressure sensitive adhesive | 150 g/m$^2$ | |
| per cm$^2$ | 1.5 mg | |
| Release rate after 24 h | 96% | 42% |

(continued)

| | Example 15 | Comparative example 7 |
|---|---|---|
| Adhesive force N/10 mm | 2.5 | 1.8 |

As shown in Table 5, it was found that even in the case that the agrochemical was changed to an insecticide, the release rate was good. On the other hand, it was found that when a hot-melt-type pressure sensitive adhesive was used, the release rate of the chemical agent was extremely low even if the concentration of the chemical agent was the same. The agrochemical-containing pressure sensitive adhesive tape of the present disclosure can be expected to have good effects even when an agrochemical contained therein is an insecticide.

Description of Symbols

    10: agrochemical-containing pressure sensitive adhesive tape
    11: substrate
    12: pressure sensitive adhesive layer

**Claims**

1. An agrochemical-containing pressure sensitive adhesive tape, comprising:

    a substrate; and
    a pressure sensitive adhesive layer provided on the substrate, wherein
    the pressure sensitive adhesive layer contains an emulsion pressure sensitive adhesive and a systemic agrochemical.

2. The agrochemical-containing pressure sensitive adhesive tape according to claim 1, wherein the emulsion pressure sensitive adhesive is an acrylic emulsion pressure sensitive adhesive.

3. The agrochemical-containing pressure sensitive adhesive tape according to claim 1, wherein the emulsion pressure sensitive adhesive is a rubber-based emulsion pressure sensitive adhesive containing latex rubber as a main component.

4. The agrochemical-containing pressure sensitive adhesive tape according to any one of claims 1 to 3, wherein the agrochemical is at least one of an insecticide, a bactericide, an insecticidal and bactericidal agent, a herbicide and a plant growth regulator.

5. The agrochemical-containing pressure sensitive adhesive tape according to claim 2, wherein
the acrylic emulsion pressure sensitive adhesive is formed by polymerizing: (a) a (meth)acrylic acid alkyl ester having an alkyl group having 4 or more and 12 or less carbon atoms, (b) a carboxyl group-containing monomer, and (c) a monomer mixture containing a copolymerizable monomer,

    (a) the (meth)acrylic acid alkyl ester having an alkyl group having 4 or more and 12 or less carbon atoms is contained in an amount of 50% by mass or more and 99.5% by mass or less,
    (b) the carboxyl group-containing monomer is contained in an amount of 0.5% by mass or more and 10% by mass or less, and
    (c) the copolymerizable monomer is contained in an amount of 0% by mass or more and 40% by mass or less.

6. The agrochemical-containing pressure sensitive adhesive tape according to claim 3, wherein

    the rubber-based emulsion pressure sensitive adhesive contains latex rubber and a tackifier,
    the latex rubber is at least one of natural rubber, chloroprene rubber, styrene-butadiene rubber, butadiene rubber, acrylonitrile-butadiene rubber, methyl methacrylate butadiene rubber and an ethylene-vinyl acetate copolymer, and

the latex rubber is contained in an amount of 30% by mass or more and 80% by mass or less relative to 100% by mass of the rubber-based emulsion pressure sensitive adhesive.

# FIG. 1

# FIG. 2

# FIG. 3

# FIG. 4

FIG. 5

**INTERNATIONAL SEARCH REPORT**

| International application No. |
| --- |
| PCT/JP2021/014334 |

A. CLASSIFICATION OF SUBJECT MATTER
Int. Cl. A01P13/00(2006.01)i, A01N43/50(2006.01)i, A01N25/24(2006.01)i,
A01N25/34(2006.01)i
FI: A01N25/34 A, A01P13/00, A01N43/50 Q, A01N25/24
According to International Patent Classification (IPC) or to both national classification and IPC

B. FIELDS SEARCHED

Minimum documentation searched (classification system followed by classification symbols)
Int. Cl. A01P13/00, A01N43/50, A01N25/24, A01N25/34

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
| --- | --- | --- |
| Y | JP 63-033301 A (ZELLER MERCK GMBH UND COMPANY KG) 13 February 1988, claims, page 3, lower left column, page 4, upper right column, page 6, upper left column | 1-6 |
| Y | JP 63-051301 A (HISAMITSU PHARMACEUTICAL CO., INC.) 04 March 1988, claims, page 3, upper left column, examples | 1-6 |
| Y | JP 58-099402 A (ITO, Susumu) 13 June 1983, claims | 1-6 |
| A | JP 06-312903 A (DAINIPPON PRINTING CO., LTD.) 08 November 1994, claims, paragraphs [0016], [0017] | 1-6 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07.06.2021 | 15.06.2021 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

Information on patent family members

| | International application No. |
|---|---|
| | PCT/JP2021/014334 |

| Patent Documents referred to in the Report | Publication Date | Patent Family | Publication Date |
|---|---|---|---|
| JP 63-033301 A | 13.02.1988 | US 5201925 A<br>claims, column 3,<br>line 48 to column 4,<br>line 44, column 6,<br>lines 42-45<br>EP 254196 A1 | |
| JP 63-051301 A | 04.03.1988 | (Family: none) | |
| JP 58-099402 A | 13.06.1983 | (Family: none) | |
| JP 06-312903 A | 08.11.1994 | (Family: none) | |

Form PCT/ISA/210 (patent family annex) (January 2015)

**EP 4 133 940 A1**

## REFERENCES CITED IN THE DESCRIPTION

**Patent documents cited in the description**

- JP 49099725 U

- JP 7023282 B